Europäisches Patentamt

European Patent Office

Office européen des brevets

(19)

(11) Veröffentlichungsnummer: **0 169 984**
**B1**

(12) # EUROPÄISCHE PATENTSCHRIFT

(45) Veröffentlichungstag der Patentschrift:
**10.01.90**

(51) Int. Cl.⁴: **F 16 J 10/04**

(21) Anmeldenummer: **85105124.3**

(22) Anmeldetag: **26.04.85**

(54) **Verfahren zum Herstellen der Laufflächen von aus Grauguss bestehenden Zylindern einer Hubkolbenmaschine.**

(30) Priorität: **27.07.84 DE 3427770**

(43) Veröffentlichungstag der Anmeldung:
**05.02.86 Patentblatt 86/6**

(45) Bekanntmachung des Hinweises auf die Patenterteilung:
**10.01.90 Patentblatt 90/2**

(84) Benannte Vertragsstaaten:
**DE FR GB IT SE**

(56) Entgegenhaltungen:
**EP-A- 0 065 645**
**DE-A- 2 000 196**
**DE-A- 3 019 096**
**DE-A- 3 210 495**
**DE-C- 63 779**
**GB-A- 2 127 338**

(73) Patentinhaber: **AUDI AG,
Auto-Union-Strasse 1 Postfach 220, D-8070 Ingolstadt
(DE)**

(72) Erfinder: **Heck, Klaus, Dr., Krummenauerstrasse 4,
D-8070 Ingolstadt (DE)**
Erfinder: **Münnighoff, Hans, Bergstrasse 46,
D-8074 Lippertshofen (DE)**
Erfinder: **Lindner, Horst, Silesiusstrasse 1,
D-8070 Ingolstadt (DE)**

(74) Vertreter: **Le Vrang, Klaus, AUDI AG
Postfach 220 Patentabteilung I/EQP, D-8070 Ingolstadt
(DE)**

## Beschreibung

Die Erfindung betrifft ein Verfahren zum Herstellen der Laufflächen von aus Grauguss bestehenden Zylindern einer Hubkolbenmaschine, insbesondere einer Brennkraftmaschine, gemäss dem Oberbegriff des Patentanspruches 1.

Ein derartiges Verfahren ist der EP-A 65 645 entnehmbar. Dabei werden die Zylinderlaufflächen zunächst einem elektrochemischen Abtrag und anschliessend einem mechanischen Reibplattieren unterzogen, wobei gegebenenfalls zwischen den beiden Bearbeitungsvorgängen ein Waschen der Zylinderlaufflächen in einer entsprechenden Waschstation eingeschaltet sein kann. In der Waschstation soll insbesondere der korrosiv wirkende Elektrolyt herausgespült werden.

Ferner ist durch die DE-A 3 019 096 ein Verfahren und eine Anlage zum Nassentsanden und Reinigen von Gussstücken bekannt, bei dem mit Drücken bis zu 800 bar, vorzugsweise um 350 bis 700 bar gearbeitet wird.

Aufgabe der Erfindung ist es, ein gattungsgemässes Verfahren anzugeben, mit welchen Laufflächen mit besonders günstigen tribologischen Eigenschaften und einer hohen Verschleissfestigkeit herstellbar sind.

Diese Aufgabe wird erfindungsgemäss mit den kennzeichnenden Merkmalen des Patentanspruches 1 gelöst. Mit dem Beaufschlagen der elektrochemisch und mechanisch bearbeiteten Laufflächen mit einem Flüssigkeitsstrahl unter hohem Druck (im weiteren als Hochdruckstrahlen bezeichnet) werden ohne nachteilige Auflockerung der Oberflächenstruktur Mikrograte beseitigt und zugeschmierte Graphitnester zumindest teilweise geöffnet und somit Laufflächen mit einem hohen metallischen Traganteil, mit Schmiermittel speichernden Grübchen und mit offenen Graphitnestern bei einer insgesamt stabilen Oberflächenstruktur geschaffen.

Die auf die Lauffläche mit hoher kinetischer Energie auftreffenden Flüssigkeitspartikel bewirken eine gewisse Rauhigkeit der Lauffläche, die verfahrensgemäss durch das anschliessende Reibplattieren geglättet wird. Das Reibplattieren kann entsprechend der gattungsbildenden EP-A 65 645 erfolgen, wobei beispielsweise mit einem Reibplattierwerkzeug gemäss der DE-A 3 149 120 gearbeitet werden kann.

Gemäss Patentanspruch 2 kann vorteilhaft nach jedem elektrochemischen Bearbeiten ein Hochdruckstrahlen nachgeschaltet werden. Wie sich gezeigt hat, kann damit die ansonsten auftretende, gegebenenfalls störende Auflockerung der Oberflächenstruktur wesentlich verringert werden. Mit dem zuletzt erfolgenden Verfahrensschritt des Glättens oder Reibplattierens der Lauffläche wird wiederum die angestrebte tribologisch günstige Lauffläche mit extrem geringer Mikrorauhigkeit und einer hohen geometrischen Genauigkeit geschaffen.

Ein Ausführungsbeispiel der Erfindung ist im folgenden mit weiteren Einzelheiten näher beschrieben. Die anliegende Zeichnung zeigt eine erfindungsgemässe Vorrichtung zur Durchführung des Verfahrens in schematischer Darstellung.

In einem Zylinderblock 2 einer nicht näher dargestellten Hubkolben-Brennkraftmaschine sind mehrere Zylinder 4 mit einer Lauffläche 6 eingebracht. Die Zylinder 4 wurden wie bekannt vorgebohrt und anschliessend in einer Honmaschine elektrochemisch gehont.

Danach wird der Zylinderblock 2 einer Vorrichtung 8 zugeführt, in welcher die Laufflächen 6 hochdruckgestrahlt werden.

Die Vorrichtung 8 weist einen Vorratsbehälter 10 auf, in dem eine Wasser-Öl-Emulsion enthalten ist. Die angeführte Emulsion wird über eine Filtervorrichtung 12 aus dem Vorratsbehälter 10 angesaugt und mittels einem Hochdruckpumpensystem 14 als Druckquelle einer Antriebsvorrichtung 16 zugeführt. Die Antriebsvorrichtung 16 ist mit einer Antriebsspindel 18 versehen, in welcher der Schaftteil 20 einer Abstrahlvorrichtung 22 aufgenommen ist.

Die Abstrahlvorrichtung 22 trägt einen Düsenkopf 24, an dem drei Rundstrahldüsen 26 umfangsmässig verteilt angeordnet sind. Die durch das Hochdruckpumpensystem 14 auf einen Druck von ca. 700 bar gebrachte Emulsion wird durch die hohle Antriebsspindel 18, den hohlen Schaftteil 20 und über entsprechende Kanäle 28 im Düsenkopf 24 den Rundstrahldüsen 26 zugeführt.

Mit Beginn des Hochdruckstrahlens wird die Abstrahlvorrichtung 22 mittels der Antriebsvorrichtung 16 in eine translatorische und rotatorische Bewegung derart versetzt, dass die Rundstrahldüsen 26 die Lauffläche 6 schraubenförmig über deren gesamten Bereich mehrfach beaufschlagen.

Die abgestrahlte Emulsion kann durch die Zylinder 4 hindurch wieder in den Vorratsbehälter 10 zurücklaufen.

Nach dem Hochdruckstrahlen der Zylinder 4 wird der Zylinderblock 2 einer Bearbeitungsstation 30 mit einer Antriebsvorrichtung 32 zugeführt. Dort erfolgt durch translatorische und rotatorische Bewegung eines Reibplattierwerkzeuges 34 bei geringem Anpressdruck ein Reibplattieren der Laufflächen 6, ohne das die an der Oberfläche der Laufflächen 6 liegenden Graphitnester verschlossen werden.

Bei mehreren abwechselnden elektrochemischen und mechanischen Bearbeitungszyklen kann nach jedem elektrochemischen Honen oder zumindest bei dem zuletzt erfolgenden elektrochemischen Bearbeitungsschritt ein Hochdruckstrahlen und als absolut letzter Bearbeitungsschritt ein Reibplattieren der · Laufflächen 6 durchgeführt werden.

Die in dem Düsenkopf 24 eingesetzten Rundstrahldüsen 26 sind derart ausgebildet, dass der Flüssigkeitsstrahl radial in einem Winkel von 60° bis 120° auf der zu bearbeitenden Lauffläche auftrifft. Damit konnten sowohl günstige Ergebnisse hinsichtlich der Oberflächenstruktur der Laufflächen 6 als auch ein günstiger Abfluss der abgestrahlten Emulsion erzielt werden. Der Austrittsdurchmesser der Rundstrahldüsen beträgt 1 mm.

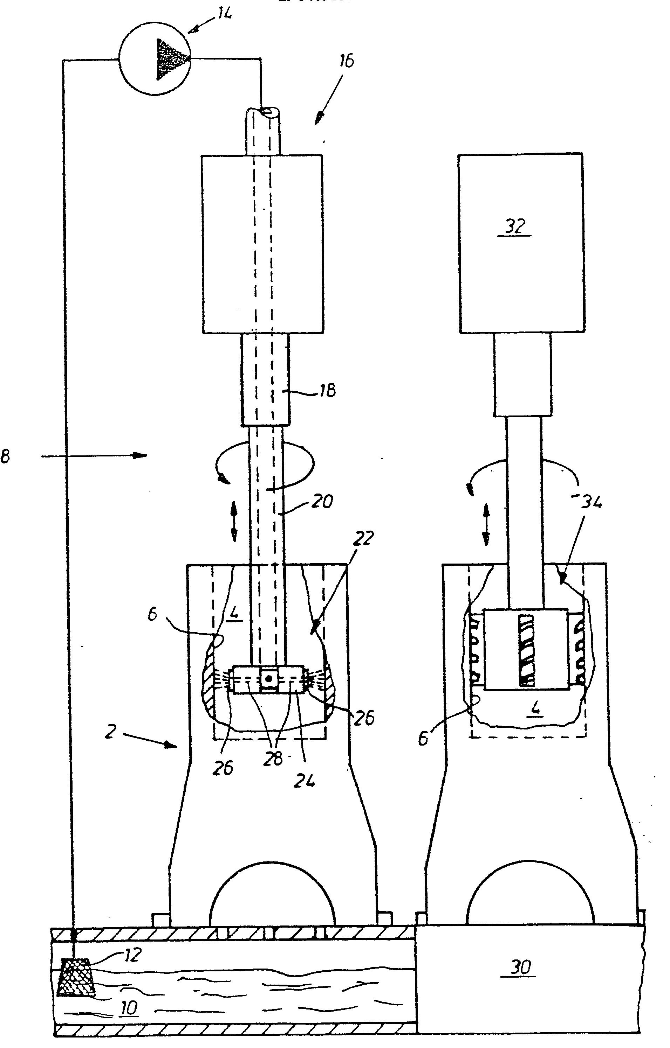

**Patentansprüche**

1. Verfahren zum Herstellen der Laufflächen von aus Grauguss bestehenden Zylindern einer Hubkolbenmaschine, insbesondere einer Brennkraftmaschine, bei welchem Verfahren das Oberflächenmaterial elektrochemisch abgetragen wird, danach einer Behandlung mit einer Flüssigkeit unterworfen wird und anschliessend die Laufflächen einem mechanischen Reibplattieren oder Glätten ohne Verschliessen der oberflächennahen Graphitnester unterzogen werden, dadurch gekennzeichnet, dass die Laufflächen (6) nach der elektrochemischen Bearbeitung mit einem Flüssigkeitsstrahl eines Druckes von > 400 bar, vorzugsweise von 600 bis 800 bar, beaufschlagt werden.

2. Verfahren nach Anspruch 1, bei dem sowohl ein elektrochemisches als auch ein mechanisches Bearbeiten der Laufflächen in mehreren Arbeitszyklen durchgeführt wird, dadurch gekennzeichnet, dass nach dem jeweiligen elektrochemischen Bearbeiten eine Bearbeitung mit dem Flüssigkeitsstrahl nachgeschaltet wird.

**Claims**

1. Method of producing the running surfaces of cylinders, consisting of grey cast iron, of a reciprocating engine, in particular of an internal-combustion engine, in which method the surface material is electrochemically deposited, after which it is subjected to a treatment with a liquid and subsequently the running surfaces undergo a mechanical friction plating or smoothing without closing of the graphite clusters close to the surface, characterized in that, after the electrochemical working, the running surfaces (6) are impinged by a liquid jet at a pressure of > 400 bar, preferably of 600 to 800 bar.

2. Method according to Claim 1, in which both an electrochemical working and a mechanical working of the running surfaces is carried out in a number of working cycles, characterized in that the respective electrochemical working is followed by a working with the liquid jet.

**Revendications**

1. Procédé pour la réalisation des surfaces de frottement des cylindres en fonte grise d'une machine à pistons alternatifs, notamment d'un moteur à combustion interne, dans lequel la matière de surface est décapée par voie électrochimique, puis soumise à un traitement avec un liquide, les surfaces de frottement étant soumises à un placage par frottement mécanique ou à un polissage sans refermer les poches de graphite proches de la surface, caractérisé en ce que les surfaces de frottement (6) sont, après le traitement électrochimique, frappées par un jet de liquide dont la pression est supérieure à 400 bars et, se situe, de préférence, entre 600 et 800 bars.

2. Procédé selon la revendication 1, dans lequel un traitement électrochimique est, de même, qu'un traitement mécanique des surfaces de frottement, effectué en plusieurs cycles de travail, caractérisé en ce que chaque traitement électrochimique est suivi d'un traitement avec le jet de liquide.